# EUROPÄISCHE PATENTANMELDUNG

(11) **EP 0 992 391 A1**
(43) Veröffentlichungstag der Anmeldung: **12.04.2000**
(21) Anmeldenummer: 99890281.1
(22) Anmeldetag: 01.09.1999
(51) Int. Cl.: B60M 1/28

(54) **Maschine zum Verlegen einer Oberleitung eines Gleises**

(30) Priorität: 07.10.1998 AT 167698
(71) Anmelder: Franz Plasser Bahnbaumaschinen- Industriegesellschaft m.b.H., 1010 Wien (AT)
(72) Erfinder: Theurer, Josef, 1010 Wien (AT); Gruber, Leopold, 3270 Scheibbs (AT)

(57) **Zusammenfassung**

Eine gleisverfahrbare Maschine (1) zum Verlegen eines allgemein als Seil (8) bezeichneten Fahrdrahtes (6) bzw. Tragseiles (7) einer elektrischen Oberleitung (9) eines Gleises (5) weist einen auf Schienenfahrwerken (2) abgestützten Maschinenrahmen (3), eine um eine Trommelachse (18) drehbar gelagerte Seiltrommel (17) sowie eine um eine Rollenachse (27) drehbare Umlenkrolle (26) zur Umlenkung des von der Seiltrommel (17) abgewickelten Seiles (8) auf. Eine die Umlenkrolle (26) lagernde Rollenhalterung (28) ist um eine Schwenkachse (29,31) verdrehbar auf einem höhen- und seitenverstellbaren Kranausleger (25) befestigt. Die Rollenhalterung (28) ist starr mit einem Tastorgan (32,33) verbunden, das zum Abtasten des Seiles (8) an einer in Längsrichtung des Seiles von der Umlenkrolle (26) distanzierten Stelle spielfrei am Seil (8) geführt ist.

## Beschreibung

Die Erfindung betrifft eine gleisverfahrbare Maschine zum Verlegen eines allgemein als Seil bezeichneten Fahrdrahtes bzw. Tragseiles einer elektrischen Oberleitung eines Gleises, mit einem auf Schienenfahrwerken abgestützten Maschinenrahmen, einer um eine Trommelachse drehbar gelagerten Seiltrommel sowie mit einer um eine Rollenachse drehbaren Umlenkrolle zur Umlenkung des von der Seiltrommel abgewickelten Seiles, wobei eine die Umlenkrolle lagernde Rollenhalterung um eine Schwenkachse verdrehbar auf einem höhen- und seitenverstellbaren Kranausleger befestigt ist.

Eine Maschine dieser Art ist aus der EP-A-0 706 910 bekannt. Das von der rotierbar auf dem Maschinenrahmen gelagerten Seiltrommel abgezogene Seil durchläuft zuerst eine auf einer Wippe angeordnete Zugspannungsvorrichtung, mit der bereits während der Verlegung die vorschriftsmäßige, endgültige Seilspannung aufgebracht wird. Die Wippe ist um eine in Maschinenlängsrichtung und horizontal verlaufende Achse verschwenkbar mit dem Maschinenrahmen verbunden. In weiterer Folge läuft das Seil über eine Umlenkrolle, die an Hand einer Rollenhalterung an einem höhen- und seitenverstellbaren Kranausleger befestigt ist, mittels dessen die Umlenkrolle in die korrekte Höhen- und Seitenlage für die Endmontage des Seils bzw. der elektrischen Oberleitung des Gleises verbracht werden kann. Eine gelenkige Verbindung zwischen der Rollenhalterung und dem Kranarm erlaubt eine ungehemmte, durch die Zugkraft des Seiles verursachte Verschwenkung bzw. Verdrehung der Rolle um zwei annähernd senkrecht zueinander stehende Schwenkachsen. Damit wird - in Verbindung mit einer seitlichen Verdrehung des Kranauslegers zur Erzielung eines Zick-Zack-förmigen Verlaufes des Fahrdrahtes - eine Anpassung der Position der Umlenkrolle zur Vermeidung einer Verbiegung insbesondere des Fahrdrahtes ermöglicht.

Bei einer weiteren derartigen, aus der EP-B-0 416 136 bekannten Maschine sind zum gleichzeitigen Verlegen von Fahrdraht und Tragseil zwei höhenmäßig voneinander distanzierbare Umlenkrollen auf einem gemeinsamen Kranausleger befestigt. Die beiden den Fahrdraht bzw. das Tragseil aufweisenden Seiltrommeln sind jeweils auf einer eigenen Wippe gelagert, die um eine in Maschinenlängsrichtung verlaufende, horizontale Achse verschwenkbar am Maschinenrahmen gelagert ist. Jeder Seiltrommel ist eine Vorrichtung zur Erzeugung einer Seilspannung zugeordnet. Die beiden Umlenkrollen sind jeweils um eine Schwenkachse frei verdrehbar auf einer Rollenhalterung befestigt, die ihrerseits um eine vertikale Achse verschwenkbar am Kranausleger montiert ist.

Weitere Maschinen zur Verlegung einer elektrischen Oberleitung sind durch die DE-A-20 12 248, DE-C-526 889 und FR-A-2 129 540 bekannt.

Die Aufgabe der vorliegenden Erfindung liegt nun in der Schaffung einer der gattungsgemäßen Art entsprechenden Maschine, bei der eine zuverlässige und besonders genaue Anpassung der Position der Umlenkrolle hinsichtlich der Seillage möglich ist.

Diese Aufgabe wird gemäß der Erfindung mit einer Maschine der eingangs beschriebenen Art dadurch gelöst, daß die Rollenhalterung starr mit einem Tastorgan verbunden ist, das zum Abtasten des Seiles an einer in Längsrichtung des Seiles von der Umlenkrolle distanzierten Stelle spielfrei am Seil geführt ist.

Mit einem derartigen Tastorgan besteht nun die vorteilhafte Möglichkeit, mit besonders einfachen konstruktiven Mitteln die Stellung der Umlenkrolle exakt auf die durch das gespannte Seil vorgegebene Fluchtlinie auszurichten und in dieser Stellung zu halten, in der die Rollenachse der Umlenkrolle genau normal zur Fluchtlinie zu liegen kommt. Dadurch kann zuverlässig eine Verbiegung bzw. Verdrallung des Seiles, insbesondere des relativ steifen Fahrdrahtes, vermieden werden. Diese exakte Ausrichtung der Umlenkrolle ist besonders in Verbindung mit einer relativ hohen, dem vorgeschriebenen endgültigen Wert entsprechenden Verlegespannung und einer entsprechenden seitlichen Auslenkung des Kranauslegers zur Erzielung eines Zick-Zack-förmigen Fahrdrahtverlaufes sehr vorteilhaft. Durch die Steifigkeit des gespannten Seiles ist eine sichere Führung des Tastorganes gegeben, ohne daß jedoch das Seil durch das Tastorgan einer Verformung unterworfen werden könnte. Die erfindungsgemäße Ausbildung ist äußerst robust und wartungsarm und eignet sich hervorragend zur besonders einfachen und problemlosen Nachrüstung von bereits im Einsatz befindlichen Maschinen zur Oberleitungsmontage.

Weitere Vorteile der Erfindung ergeben sich aus den Unteransprüchen und der Zeichnung.

Im folgenden wird die Erfindung an Hand eines in der Zeichnung dargestellten Ausführungsbeispieles näher beschrieben.

Es zeigen:
Fig. 1 und 2 eine vereinfachte Seitenansicht bzw. Draufsicht auf eine gleisverfahrbare Maschine zum Verlegen einer elektrischen Oberleitung eines Gleises, mit einer auf einem Kranausleger montierten Umlenkrolle,
Fig. 3 eine Seitenansicht der Umlenkrolle, und
Fig. 4 eine vereinfachte Draufsicht auf die Umlenkrolle in einer Einsatzstellung

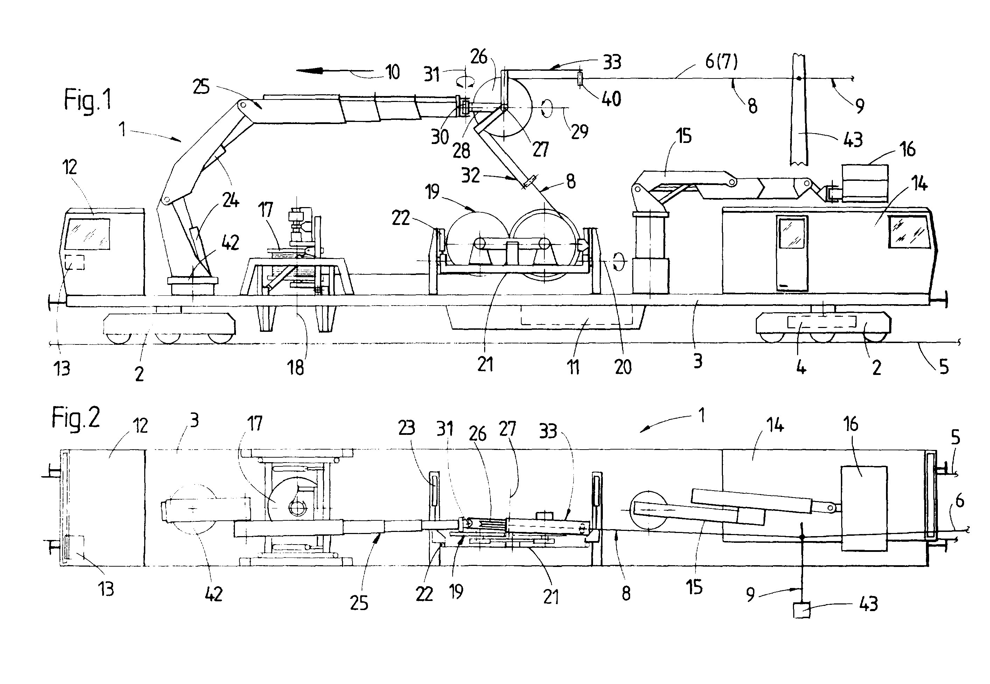

Die in Fig. 1 und 2 ersichtliche Maschine 1 weist einen auf Schienenfahrwerken 2 abgestützten Maschinenrahmen 3 auf und ist mit Hilfe eines Fahrantriebes 4 auf einem Gleis 5 verfahrbar. Die Arbeitsrichtung der zum Verlegen eines Fahrdrahtes 6 bzw. eines Tragseiles 7 (im folgenden der Einfachheit halber auch gemeinsam als Seil 8 bezeichnet) einer elektrischen Oberleitung 9 ausgebildeten Maschine 1 ist durch einen Pfeil 10 dargestellt. Für die Energieversorgung ist ein Motor 11 vorgesehen. In einer Fahrkabine 12 befindet sich eine zentrale Steuereinrichtung 13. Neben einer weiteren Fahr- bzw. Arbeitskabine 14 ist ein höhen- und seitenverstellbarer Kran 15 mit einem Arbeitskorb 16 angeordnet.

Zur Lagerung des aufgewickelten Fahrdrahtes 6 bzw. Tragseiles 7 ist eine Seiltrommel 17 vorgesehen, die auf dem Maschinenrahmen 3 um eine Trommelachse 18 drehbar gelagert ist. Der Seiltrommel 17 ist eine Zugspannungsvorrichtung 19 zu- bzw. nachgeordnet, die auf einer auf dem Maschinenrahmen 3 gelagerten Wippe 21 befestigt ist. Diese ist an Hand eines Antriebs 22 um eine in Maschinenlängsrichtung verlaufende, horizontale Achse 20 verschwenkbar und mittels eines weiteren Antriebs 23 in Maschinenquerrichtung relativ zum Maschinenrahmen 3 verschiebbar ausgebildet.

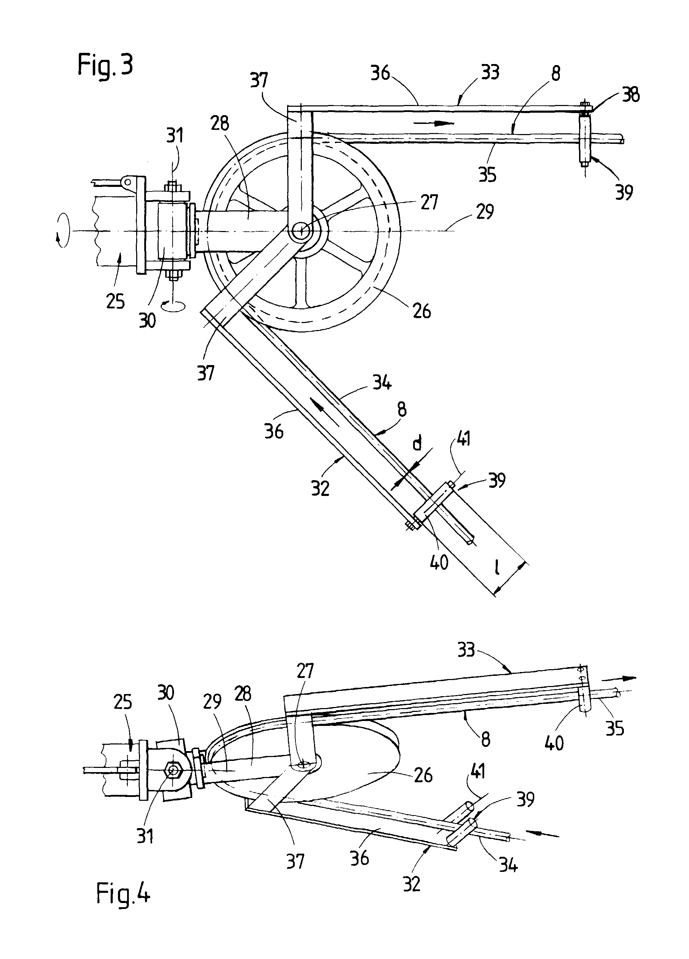

Im Bereich zwischen der Fahrkabine 12 und der Seiltrommel 17 befindet sich ein auf dem Maschinenrahmen 3 aufgestellter, durch Antriebe 24 höhen-, seiten- und längsverstellbarer Kranausleger 25, der an seinem freien Ende eine Umlenkrolle 26 zur Umlenkung des von der Seiltrommel 17 abgewickelten Seils 8 aufweist. Wie im weiteren nun auch in Fig. 3 und 4 besser zu erkennen, ist die Umlenkrolle 26 um eine Rollenachse 27 drehbar auf einer gabelartigen Rollenhalterung 28 gelagert. Diese ist um eine annähernd horizontale Schwenkachse 29 drehbar mit einem Lagerblock 30 verbunden, der seinerseits um eine etwa vertikal verlaufende Schwenkachse 31 rotierbar am Kranausleger 25 befestigt ist.

Die Rollenhalterung 28 ist mit zwei Tastorganen 32,33 ausgestattet, die jeweils zum Abtasten eines zur Umlenkrolle 26 zuführenden Seilabschnittes 34 bzw. eines von der Umlenkrolle 26 wegführenden Seilabschnittes 35 ausgebildet sind. Die Tastorgane 32 und 33 sind jeweils als parallel zum zugeordneten Seilabschnitt 34,35 verlaufender Hebel 36 ausgebildet, der an Hand einer gabelartigen Halterung 37 mit der Rollenhalterung 28 starr verbunden ist und an seinem freien Ende 38 ein mit dem Seil 8 in Eingriff stehendes Tastelement 39 zum Abtasten des Seils 8 an einer in dessen Längsrichtung von der Umlenkrolle 26 distanzierten Stelle aufweist. Das Tastelement 39 ist spielfrei am Seil 8 geführt und besteht aus zwei drehbaren Rollen 40 mit zueinander parallelen Rotationsachsen 41, die senkrecht zur Längsrichtung des Seils 8 bzw. Seilabschnittes 34 oder 35 verlaufen und an - normal zur Seillängsrichtung gesehen - einander gegenüberliegenden Seiten des Seils 8 auf diesem abrollen. Die Länge I der Rollen 40 entspricht dabei wenigstens der 4-fachen Dicke d des Seiles 8, gemessen in der Richtung der Rotationsachsen 41 (Fig. 3).

Die Montage der elektrischen Oberleitung 9, insbesondere des Fahrdrahtes 6, an Fahrleitungsmasten 43 erfolgt im Zick-Zack-Verlauf, der durch entsprechende seitliche Auslenkung des Kranauslegers 25 mit Hilfe eines Drehantriebes 42 erzielt wird. Dadurch wird die Umlenkrolle 26 innerhalb eines bestimmten Bereiches in Maschinenquerrichtung hin- und hergeschwenkt und so der wegführende Seilabschnitt 35 im Winkel zur Maschinenlängsachse verstellt bzw. geführt. Gleichzeitig ändert sich dadurch auch die Lage der Umlenkrolle 26 in bezug auf die Zugspannungsvorrichtung 19 auf der Wippe 21 und somit auch der Winkel des zuführenden Seilabschnitts 34, wie in Fig. 4 deutlich wird. Die Lagerung der Umlenkrolle 26 am Kranausleger 25 mittels der beiden - in annähernd rechtem Winkel zueinander verlaufenden - Schwenkachsen 29 und 31 ermöglicht es, die Lage der Umlenkrolle 26 der jeweiligen Lage einer durch die beiden Seilabschnitte 34 und 35 aufgespannten Ebene mit Hilfe der Tastorgane 32 und 33 exakt anzupassen. Die Tastorgane 32,33 fungieren dabei quasi als Nachführorgane, die auf Grund der starren Verbindung mit der Rollenhalterung 28 die Umlenkrolle 26 zwangsläufig in der genannten Seilebene halten und lagemäßig auf die jeweilige Winkelposition der Seilabschnitte 34 und 35 abstimmen.

## Patentansprüche

1. Gleisverfahrbare Maschine (1) zum Verlegen eines allgemein als Seil (8) bezeichneten Fahrdrahtes (6) bzw. Tragseiles (7) einer elektrischen Oberleitung (9) eines Gleises (5), mit einem auf Schienenfahrwerken (2) abgestützten Maschinenrahmen (3), einer um eine Trommelachse (18) drehbar gelagerten Seiltrommel (17) sowie mit einer um eine Rollenachse (27) drehbaren Umlenkrolle (26) zur Umlenkung des von der Seiltrommel (17) abgewickelten Seiles (8), wobei eine die Umlenkrolle (26) lagernde Rollenhalterung (28) um eine Schwenkachse (31) verdrehbar auf einem höhen- und seitenverstellbaren Kranausleger (25) befestigt ist, **dadurch gekennzeichnet**, daß die Rollenhalterung (28) starr mit einem Tastorgan (33) verbunden ist, das zum Abtasten des Seiles (8) an einer in Längsrichtung des Seiles von der Umlenkrolle (26) distanzierten Stelle spielfrei am Seil (8) geführt ist.

2. Maschine nach Anspruch 1, dadurch gekennzeichnet, daß die Rollenhalterung (28) um zwei - in einem annähernd rechten Winkel zueinander verlaufende - Schwenkachsen (29,31) verdrehbar ausgebildet ist und zwei Tastorgane (32,33) aufweist, von denen ein Tastorgan (32) zum Abtasten eines zur Umlenkrolle (26) zuführenden Seilabschnitts (34) und das andere Tastorgan (33) zum Abtasten eines von der Umlenkrolle (26) wegführenden Seilabschnitts (35) ausgebildet ist.

3. Maschine nach Anspruch 1 oder 2, dadurch gekennzeichnet, daß das Tastorgan (32,33) als parallel zum abzutastenden Seilabschnitt (34,35) verlaufender Hebel (36) mit einem an dessen freiem Ende (38) angeordneten, in Eingriff mit dem Seil (8) stehenden Tastelement (39) ausgebildet ist.

4. Maschine nach Anspruch 3, dadurch gekennzeichnet, daß das Tastelement (39) aus zwei drehbaren Rollen (40) mit zueinander parallelen, senkrecht zur Längsrichtung des Seilabschnittes (34,35) verlaufenden Rotationsachsen (41) gebildet ist, wobei die Rollen (40) im Arbeitseinsatz an - normal zur Seillängsrichtung gesehen - gegenüberliegenden Seiten des Seiles (8) auf diesem abrollbar sind.

5. Maschine nach Anspruch 4, dadurch gekennzeichnet, daß die Rollen (40) eine Länge (I) aufweisen, die wenigstens der 4-fachen Dicke (d) des Seiles (8) - in Richtung der Rotationsachsen (41) gesehen - entspricht.
